# EUROPÄISCHE PATENTSCHRIFT

(11) **EP 1 810 885 B1**
(45) Veröffentlichungstag und Bekanntmachung des Hinweises auf die Patenterteilung: **17.08.2011**
(21) Anmeldenummer: 07000925.3
(22) Anmeldetag: 17.01.2007
(51) Int. Cl.: B60R 7/10

(54) **Vorrichtung zur Halterung von Ladegut**
Device for securing of load
Dispositif pour la fixation de la charge

(30) Priorität: 20.01.2006 DE 102006002783
(43) Veröffentlichungstag der Anmeldung: 25.07.2007
(73) Patentinhaber: Bayerische Motoren Werke Aktiengesellschaft, 80809 München (DE)
(72) Erfinder: Stein, Johann, 85461 Grünbach (DE); Czep, Franz, 81673 München (DE)

(56) Entgegenhaltungen:
- EP-A1- 1 332 920
- DE-U1- 9 405 306
- JP-A- 2001 260 735
- US-A- 4 221 354

## Beschreibung

Die Erfindung betrifft eine Vorrichtung zur Halterung von Ladegut gemäß dem Oberbegriff des Anspruchs 1.

Es ist bereits bekannt, im Laderaum eines Fahrzeuges Haken und/oder Ösen vorzusehen, um daran unmittelbar über ein Halteteil eines Ladeguts oder mittelbar über Verzurrmittel oder dergleichen das Ladegut zu befestigen.

Aus der JP 2001 260735 ist eine gattungsbildende Vorrichtung zur Halterung von Ladegut bekannt.

Aufgabe der Erfindung ist es, eine Vorrichtung zur Halterung von Ladegut zu schaffen, die einen einfachen Aufbau aufweist.

Diese Aufgabe wird durch die Merkmale des Anspruchs 1 gelöst.

Die erfindungsgemäße Vorrichtung weist eine Nichtgebrauchsstellung auf, in der eine in einen (Lade-)Raum zeigende Oberfläche der Vorrichtung im Wesentlichen eben, das heißt ohne vorstehende Teile, ist. Damit ergibt sich in der Nichtgebrauchsstellung eine ansprechende Optik, so dass die erfindungsgemäße Vorrichtung beispielsweise auch in einem Innenraum eines Kraftfahrzeuges an den Verkleidungswänden oder einem sonstigen Fahrzeugbauteil mit einem dahinter liegenden Hohlraum befestigt werden kann.

Die erfindungsgemäße Vorrichtung weist im Wesentlichen drei im Gehäuse beweglich oder schwenkbar angeordnete Funktionsteile auf. Zu diesem Zweck ist ein durch Seitenwände und einen Boden begrenzter Innenraum oder Hohlraum des Gehäuses zum betreffenden Raum, beispielsweise zum Laderaum eines Kraftfahrzeuges, hin offen. In der Nichtgebrauchsstellung sind die Funktionsteile in dem Hohlraum des Gehäuses versenkt. Die Funktionsteile sind aus der Nichtgebrauchsstellung in eine Gebrauchsstellung, in der eine Befestigung des Ladegutes erfolgt, und zurück verschwenkbar.

Zwei erfindungsgemäße Funktionsbauteile, durch die das Ladegut gehaltert wird, sind ein Haken und ein Sicherungsbügel. In der Gebrauchsstellung ist ein frei verschwenkbares Ende des Hakens mit einem frei verschwenkbaren Ende des Sicherungsbügels über Mittel formschlüssig verriegelt. Dadurch ergibt sich eine selbstverstärkende Verriegelung.

In einer vorteilhaften Ausführungsform ist der Haken in der Nichtgebrauchsstellung durch ein als Entriegelungsvorrichtung oder Betätigungsvorrichtung ausgebildetes, weiteres Funktionsbauteil über Formschluss verriegelt. Durch eine Verschwenkung der Betätigungsvorrichtung aus der Nichtgebrauchsstellung in die Gebrauchsstellung findet eine Entriegelung des Hakens statt. In einer weiteren Funktion der Betätigungsvorrichtung wird beim Zurückschwenken des Hakens in die Nichtgebrauchsstellung, wobei der der Haken den Sicherungsbügel zwangsläufig mitverschwenkt, der Haken durch die Betätigungsvorrichtung wieder verriegelt.

In einer vorteilhaften Ausführungsform ist der Betätigungsweg, beispielsweise das Schwenken der Betätigungsvorrichtung um eine im Gehäuse gelagerte Schwenkachse sehr gering, beispielsweise liegt der Verschwenkweg s bei s = 3 bis 8mm bzw. bei einem Schwenkwinkel *α* von *α* = 2 bis 7°. Dadurch genügt ein bloßes Antippen der Betätigungsvorrichtung, die vorteilhafterweise als eine Taste ausgebildet ist, um die beiden anderen Funktionsbauteile aus der Nichtgebrauchsstellung zu entriegeln, so dass diese in eine Gebrauchsstellung verschwenken können.

Der erfindungsgemäße Haken überdeckt einen vorderen Abschnitt des erfindungsgemäßen Sicherungsbügels einschließlich des freien Endes des erfindungsgemäßen Sicherungsbügels. An den vorderen Abschnitt des erfindungsgemäßen Sicherungsbügels schließt sich ein Absatz an. Das freie Ende des erfindungsgemäßen Hakens ist um einen Spalt beabstandet gegenüber diesem Absatz des erfindungsgemäßen Sicherungsbügels angeordnet. Durch diese Bauweise ist in der Nichtgebrauchsstellung der erfindungsgemäßen Vorrichtung eine ebene Außenfläche der erfindungsgemäßen Vorrichtung möglich.

Vorteilhafterweise sind Mittel vorgesehen, die eine Vorspannung des Hakens, des Sicherungsbügels und der Betätigungsvorrichtung in der Weise bewirken, dass bei einer Betätigung der Betätigungsvorrichtung der Haken und der Sicherungsbügel in die Verriegelungsposition der End-Gebrauchsstellung verschwenken und die Betätigungsvorrichtung in die Nichtgebrauchsstellung zurückschwenkt.

Die Mittel, die die Vorspannung der Betätigungsvorrichtung, des Hakens und des Sicherungsbügels so bewirken, dass die Betätigungsvorrichtung in die Nichtgebrauchsstellung und der Haken und der Sicherungsbügel in die ausgeklappte Stellung gedrückt werden, sind vorteilhafterweise Federn. Durch die Verwendung von Federn ergibt sich ein einfacher Aufbau.

In einer vorteilhaften Ausführungsform ist die jeweilige Feder, die jeweils um eine Schwenkachse für den Haken und die um eine Schwenkachse für den Sicherungsbügel angeordnet ist, eine Torsionsfeder ist. Ein Ende der Torsionsfeder stützt sich beispielsweise am Gehäuse und das andere Ende entsprechend an dem Haken oder dem Sicherungsbügel ab. Die Feder zum Zurückschwenken der Betätigungsvorrichtung in die Nichtgebrauchsstellung ist vorteilhafterweise eine Schraubenfeder, die mit ihren Enden zum einen an der Betätigungsvorrichtung und zum anderen über Mittel am Gehäuse gelagert ist.

Durch eine auf eine Innenfläche des Hakens wirkende Feder wird der Haken in eine vorgegebene, ausgeklappte Stellung verschwenkt. Gleichzeitig wird gegensinnig zu der Schwenkbewegung des Hakens ein freies Ende des Sicherungsbügels über die auf eine Innenfläche des Sicherungsbügels wirkende Feder um ein im Gehäuse gelagertes Ende des Sicherungsbügels geschwenkt. Dadurch ergibt sich ein zeitlich kurzer Schwenkvorgang.

In einer vorteilhaften Ausführungsform ist die die Schwenkbewegung des Sicherungsbügels bewirkende Federkraft so eingestellt, dass das frei verschwenkbare Ende des Sicherungsbügels an einer dazu gegenüberliegenden Innenfläche des Hakens bei der Aufklappbewegung des Hakens und des Sicherungsbügels so lange anliegt, bis die Schwenkbewegung des Hakens durch einen mit dem Gehäuse in Eingriff kommenden Anschlag gestoppt wird.

Vorteilhafterweise sind an dem frei verschwenkbaren Ende des Hakens und an dem frei verschwenkbaren Ende des Sicherungsbügels bauliche Maßnahmen, wie Anschläge, Haken, Rastnasen, Öffnungen, Vertiefungen oder dergleichen vorgesehen. Die baulichen Maßnahmen kommen in der Endstellung des ausgeklappten Hakens und des ausgeklappten Sicherungsbügels formschlüssig miteinander in Eingriff, so dass sich eine Verriegelungsstellung zwischen den freien Enden des Hakens und des Sicherungsbügels ergibt. Durch diese gegenseitige mechanische Verriegelung ist eine erhöhte Traglast möglich.

Zum Einhängen eines Halteteils oder Verzurrmittels wird der Sicherungsbügel entgegen der Vorspannung in die Nichtgebrauchsstellung zurückgeschwenkt und das entsprechende Halteteil in den entstehenden Spalt zwischen der Innenfläche des Hakens und der Außenfläche des Gehäuses eingeführt. Durch Loslassen des Sicherungsbügels verschwenkt der Sicherungsbügel in die Verriegelungsposition zurück und das Ladegut ist gehaltert.

Das Gewicht des Ladeguts drückt auf den Haken, so dass der Formschluss zwischen den beiden freien, verschwenkbaren Enden des Hakens und des Sicherungsbügels zusätzlich verstärkt wird. Dadurch kann sich das Ladegut bei einem Fahrbetrieb nicht aus dem geschlossenen System des Verriegelungszustandes des Hakens und des Sicherungsbügels von selbst lösen. Das Ladegut wird somit beim Bremsen des Fahrzeuges bzw. bei einem Unfall festgehalten.

Ferner wird durch die Verwendung der erfindungsgemäßen Vorrichtung ein Umfallen oder ein unkontrolliertes Bewegen über einen bestimmten Umfang hinaus vermieden. Zur Entnahme des Ladegutes wird der Sicherungsbügel manuell in die Nichtgebrauchsstellung zurückverschwenkt und das an dem Haken aufgehängte beispielsweise schlaufenförmige Halteteil entnommen.

Die erfindungsgemäße Vorrichtung weist Abweisrippen am Haken und am Sicherungsbügel auf, die ein Einklemmen beim Einhängen und beim Aushängen des Halteteils des Ladegutes zwischen der Innenfläche des Hakens und der Außenfläche des Auflageflansches des Gehäuses und zwischen der Unterseite des Sicherungsbügels und des Auflageflansches des Gehäuses verhindern.

Zum anderen ist eine Abweisvorrichtung am freien, verschwenkbaren Ende des Hakens vorgesehen, damit beim Aushängen des Halteteils des Ladegutes das Halteteil nicht an den Rasthaken oder dergleichen des Hakens hängen bleibt. Die zuerst genannte Abweisvorrichtung in Form einer Abweisrippe ist an dem jeweiligen schwenkbar gelagerten Ende des Hakens bzw. des Sicherungsbügels ausgebildet.

In einer vorteilhaften Ausführungsform ist die Abweisvorrichtung in Form einer Abweisrippe mindestens an einem Außenrand oder an beiden Außenrändern oder in der Mitte des Hakens in der Höhe des gelagerten Endes des Hakens in Form einer Rampe oder eines vorstehenden Vorsprunges ausgebildet. Die Form und Größe der Abweisvorrichtung ist so ausgelegt, dass ein Halteteil des Ladeguts nicht zwischen einem Boden des Gehäuses und der Unterseite des Hakens rutschen kann.

Am Sicherungsbügel ist eine Abweisvorrichtung in Form von mindestens einer kreissegmentförmigen Abweisrippe ausgebildet, deren Abweisfläche sich von dem vorderen, frei verschwenkbaren Ende des Sicherungsbügels nach unten in Richtung des Gehäusebodens in vertikaler Richtung erstreckt. Die Größe und Form der Abweisvorrichtung des Sicherungsbügels ist so bemessen, dass das Halteteil des Ladeguts nicht zwischen den Sicherungsbügel und den Gehäuseboden rutschen kann. Eine weitere erfindungsgemäße Abweisvorrichtung ist in Form von mindestens einer Abweisrippe am vorderen, frei verschwenkbaren Ende des Hakens in Form einer Rampe, die in der Seitenansicht in etwa dreieckförmig ist, vorgesehen.

In einer vorteilhaften Ausführungsform sind an der Innenfläche des Hakens Führungen in Form von Erhebungen vorgesehen, die einen definierten Kontakt des frei verschwenkbaren Endes des Sicherungsbügels an der Innenseite des Hakens bewirken. In einer anderen vorteilhaften Ausführungsform sind die Führungen über die gesamte Länge oder über den vorderen Abschnitt der Innenfläche des Hakens ausgebildet, so dass die Führungen gleichzeitig zur Versteifung des Hakens dienen.

Vorteilhafterweise ist die jeweilige Schwenkachse am Haken, am Sicherungsbügel und an der Betätigungstaste einstückig angeformt oder als ein separates Bauteil in Öffnungen der genannten Funktionsbauteile befestigt.

In einer vorteilhaften Ausführungsform sind die vorgesehenen Anschläge an den jeweiligen Funktionsbauteilen einstückig ausgebildet, so dass die Herstellungskosten verringert sind.

Die erfindungsgemäße Vorrichtung ist vorteilhafterweise in einem Innenraum eines Kraftfahrzeuges, insbesondere im Kofferraum und auch im Fahrzeuginnenraum, verwendbar. Die erfindungsgemäße Vorrichtung ist überall an den Verkleidungsteilen oder dergleichen befestigbar, an denen genügend Hohlraum zum Einstecken der erfindungsgemäßen Vorrichtung vorhanden ist.

Es ist auch möglich, an einer Rückenlehne eines Sitzes an einer nicht sicherheitsrelevanten Stelle die erfindungsgemäße Vorrichtung anzuordnen. Dies ist beispielsweise an einer Rückseite der Rückenlehne der Vordersitze möglich, oder an einer Unterseite einer Mittelarmlehne der Rücksitzbank, die in der Nichtgebrauchsstellung in den Fahrzeuginnenraum zeigt.

Die erfindungsgemäße Vorrichtung kann beispielsweise an einer Rückseite einer Rücksitzlehne oder an einer feststehenden Trennwandverkleidung hinter einer klappbaren Rücksitzlehne, beispielsweise bei einem Kabriolett, angeordnet sein. Bei einer klappbaren Rücksitzlehne kann die erfindungsgemäße Vorrichtung entweder in einer der Neigung der Rücksitzlehne in der Sitzposition entsprechenden schrägen Lage oder in einer horizontalen Lage verwendbar sein, in der die Rücksitzlehne in die Ladeflächenposition umgeklappt ist.

Die Anordnung der erfindungsgemäßen Vorrichtung ist nicht auf einen bestimmten Fahrzeugtyp beschränkt. Die erfindungsgemäße Vorrichtung kann in einem Personenkraftwagen, wie beispielsweise einer Limousine, einem Kabriolett, einem Van, einem Kraftfahrzeug mit offenem Kofferraum, in einem Nutzfahrzeug, beispielsweise in einer Fahrerkabine, in einem Freizeitfahrzeug, wie beispielsweise einem Wohnmobil oder einem Campingwagen, in Reisebussen und/oder in Räumen von See- und/oder Schienenfahrzeugen eingebaut werden.

Eine Ausführungsform der Erfindung wird nachstehend anhand der Zeichnungen beispielshalber beschrieben. Dabei zeigen:
- Fig. 1: eine perspektivische Ansicht einer Vorrichtung zur Halterung von Ladegut in einer entriegelten Stellung, in der sich ein Haken in einer ausgeklappten Lage befindet und ein Sicherungsbügel durch ein Halteteil eines Ladegutes in eine neutrale Position bewegt ist,
- Fig. 2: eine perspektivische Ansicht der in der Fig. 1 gezeigten Vorrichtung in einer verriegelten Stellung, in der sich der Sicherungsbügel in einer verriegelten Stellung mit dem Haken zur Sicherung des Halteteils des Ladegutes befindet,
- Fig. 3: eine Schnittansicht der Vorrichtung zur Halterung von Ladegut in einer zusammengeklappten Stellung, in der eine Außenfläche des Hakens und des Sicherungsbügels eine ebene Fläche mit einer Umgebungsfläche eines Anbringungsortes der Vorrichtung zur Halterung von Ladegut bildet,
- Fig. 4: eine Schnittansicht der Vorrichtung zur Halterung von Ladegut, in der der Haken durch die Betätigung einer Entriegelungstaste in eine ausgeklappte Lage verschwenkt ist und der Sicherungsbügel durch eine Kraft, die gegen eine Vorspannung des Sicherungsbügels wirkt, in einer eingeklappten Lage gehaltert ist,
- Fig. 5: eine Schnittansicht der Vorrichtung zur Halterung von Ladegut in einer entriegelten Stellung entsprechend der Fig. 1, in der ein Halteteil eines Ladegutes den Sicherungsbügel in die eingeklappte Stellung drückt,
- Fig. 6: eine Schnittansicht der Vorrichtung zur Halterung von Ladegut in einer verriegelten Stellung entsprechend der Fig. 2, in der sich ein Halteteil eines Ladegutes in einer eingehängten Stellung befindet und die beiden gegenüberliegenden Enden des Hakens und des Sicherungsbügels miteinander formschlüssig verriegelt sind,
- Fig. 7a und 7b: jeweils eine Seitenansicht der Vorrichtung zur Halterung von Ladegut in einer Position, in der ein Halteteil eines Ladegutes in einen Zwischenraum zwischen dem Haken und dem Gehäuse eingehängt bzw. ausgehängt werden kann, wobei die Fig. 7b eine transparente Darstellung der Fig. 7a ist,
- Fig. 8a und 8b: Seitenansichten der Vorrichtung zur Halterung von Ladegut in jeweils einer verriegelten Stellung, wobei die Fig. 8b eine transparente Darstellung der Fig. 8a ist,
- Fig. 9: eine Ansicht von oben auf die Vorrichtung zur Halterung von Ladegut in der verriegelten Stellung,
- Fig. 10: eine perspektivische Ansicht des Hakens und des Sicherungsbügels in der verriegelten Stellung, in der die beiden gegenüberliegenden Enden des Hakens und des Sicherungsbügels ineinander verhakt sind,
- Fig. 11: eine perspektivische Ansicht von oben auf die Vorrichtung zur Halterung von Ladegut im zusammengeklappten Zustand,
- Fig. 12: eine Ansicht von oben auf die Vorrichtung zur Halterung von Ladegut, in der der Haken und der Sicherungsbügel entfernt sind und
- Fig. 13: eine perspektivische Ansicht von oben auf die Vorrichtung zur Halterung von Ladegut, bei der im Unterschied zur Fig. 12 zusätzlich die Entriegelungstaste und die Befestigungsschrauben, die sich zu beiden Seiten des Sicherungsbügel befinden, entfernt sind.

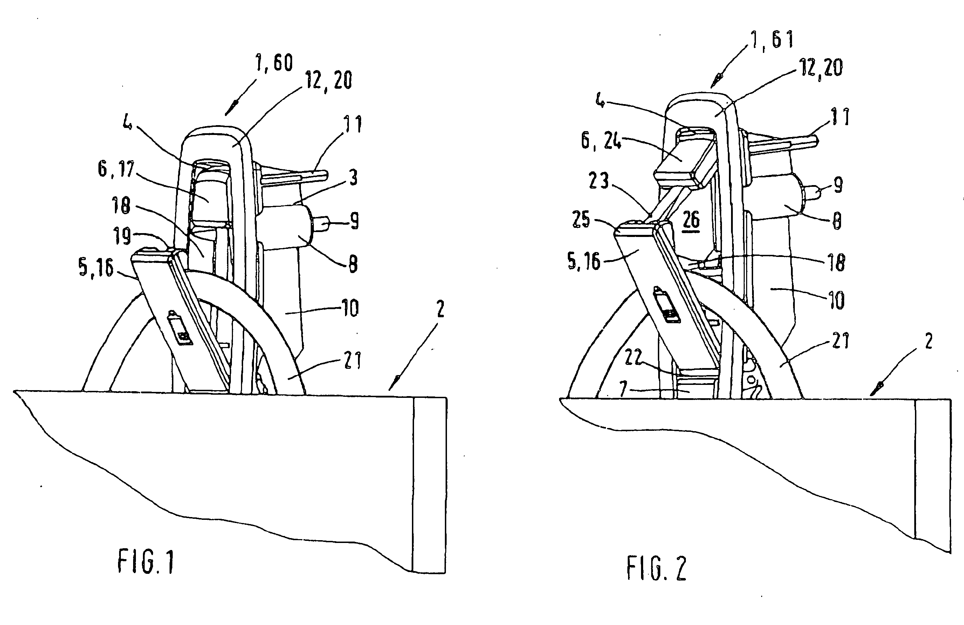

Die Fig. 1 zeigt eine Vorrichtung 1 zur Halterung von Ladegut 2. Die Vorrichtung 1 weist ein zu einer Seite hin offenes Gehäuse 3 auf, das einen Hohlraum 4 umschließt. In dem Hohlraum 4 sind ein Haken 5, ein Sicherungsbügel 6 und eine Entriegelungstaste 7 schwenkbar gelagert.

An dem Gehäuse 3 sind zwei, beispielsweise zylinderförmige Führungen 8 für jeweils eine Befestigungsschraube 9 einstückig ausgebildet. Ferner sind an dem Gehäuse 3 Versteifungswände 10 und beispielsweise zwei Zentrierzapfen 11 vorgesehen.

Die beiden Zentrierzapfen 11 dienen zur Vorzentrierung des Gehäuses 3 in einer Durchgangsöffnung 14, die in einem Bauteil 15, beispielsweise einer Verkleidung oder Seitenwand eines Kraftfahrzeuges ausgebildet ist. Durch die beiden Zentrierzapfen 11 werden die vorgesehenen Befestigungsschrauben 9 zur jeweiligen Symmetrieachse eines entsprechenden Gewindes ausgerichtet, wobei die vorgesehenen Gewinde in dem Bauteil 15 des Fahrzeuges ausgebildet sind. Die Befestigungsschrauben 9 können dadurch bei der Montage sofort jeweils in das vorgesehene Gewinde eingreifen.

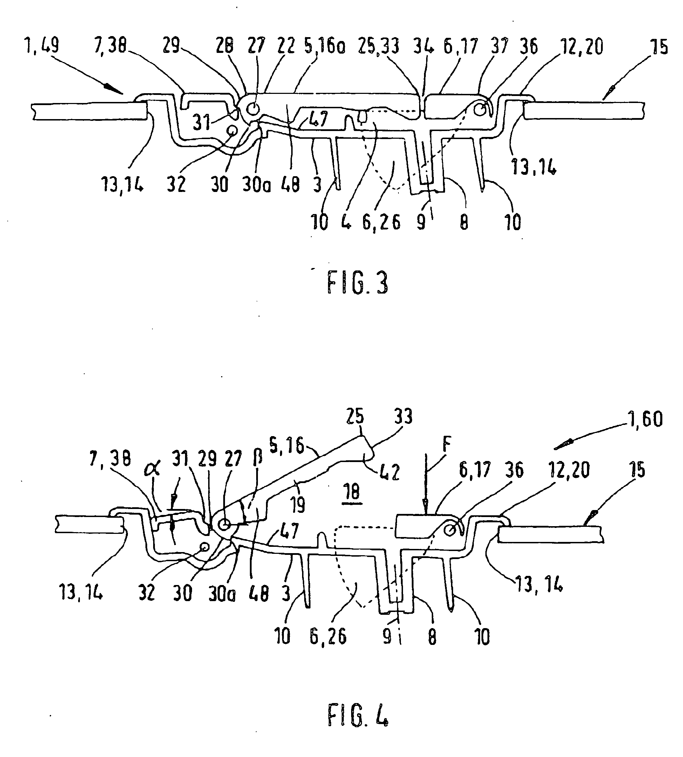

An dem Gehäuse 3 ist ferner ein umlaufender Auflageflansch 12 vorgesehen. Der Auflageflansch 12 dient zur Anordnung des Gehäuses 3 an einem Rand 13 der Durchgangsöffnung 14 des Bauteils 15, wie dies in den Figuren 3 bis 6 gezeigt ist.

Die Fig. 1 zeigt eine Zwischen-Gebrauchsstellung 60 der Vorrichtung 1. In der Fig. 1 befindet sich der Haken 5 in einer ausgeklappten Stellung 16 und der Sicherungsbügel 6 in einer eingeklappten Position 17. In einem Zwischenraum 18 zwischen einer Innenfläche 19 des Hakens 5 und einer Außenfläche 20 des Auflageflansches 12 ist in der Fig. 1 ein Halteteil 21 des Ladegutes 2 angeordnet.

Das Halteteil 21 drückt den Sicherungsbügel 6 in den Hohlraum 4 des Gehäuses 3. Das Halteteil 21 kann in dieser Position der Vorrichtung 1 in den Zwischenraum 18 eingehängt oder aus diesem Zwischenraum 18 herausgenommen werden. In der gezeigten Ausführungsform ist das Halteteil 21 ein Tragriemen oder ein Griff einer Tasche 2.

Die Fig. 2 zeigt eine End-Gebrauchsstellung 61 der Vorrichtung 1. In der Fig. 2 ist das Halteteil 21 weiter nach unten in Richtung eines gelagerten Endes 22 des Hakens 5 verschoben, so dass ein freies Ende 23 des Sicherungsbügels 6 über das Halteteil 21 hinweg in eine Verriegelungsposition 24 verschwenken kann. In der Verriegelungsposition 24 ist ein freies Ende 25 des Hakens 5 mit dem freien Ende 23 des Sicherungsbügels 6 formschlüssig verriegelt. Am Sicherungsbügel 6 ist einstückig eine Abweisrippe 26 ausgebildet, die beim Aushängen des Halteteils 21 des Ladeguts 2 als Einklemmschutz dient.

Die Fig. 3 bis 6 zeigen jeweils eine Ansicht eines Längsschnittes der Vorrichtung 1 von der Seite. In den Fig. 3 und 4 verläuft der jeweilige Längsschnitt so, dass die Abweisrippe 26 des Sicherungsbügels 6 nicht sichtbar ist.

Die Fig. 3 zeigt die Vorrichtung 1 in einer Nichtgebrauchsstellung 49. In der Fig. 3 befindet sich der Haken 5 in einer eingeklappten Stellung 16a. Der Haken 5 ist an seinem Ende 22 über eine im Gehäuse 3 angeordnete Schwenkachse 27 drehbar gelagert. An einer Stirnseite 28 des Endes 22 des Hakens 5 sind Rastnasen oder Anschläge 29, 30 ausgebildet.

Gegenüberliegend zu dem äußeren Rasthaken 29 befindet sich ein Anschlag oder Rasthaken 31, der an der Entriegelungstaste 7 angeformt ist. Die Entriegelungstaste 7 ist über eine im Gehäuse 3 angeordnete Schwenkachse 32 drehbar gelagert. Der Anschlag 30 des Hakens 5 ist in der eingeklappten Stellung 16 a von einem Anschlag 30a entfernt, der am Gehäuse 3 ausgebildet ist.

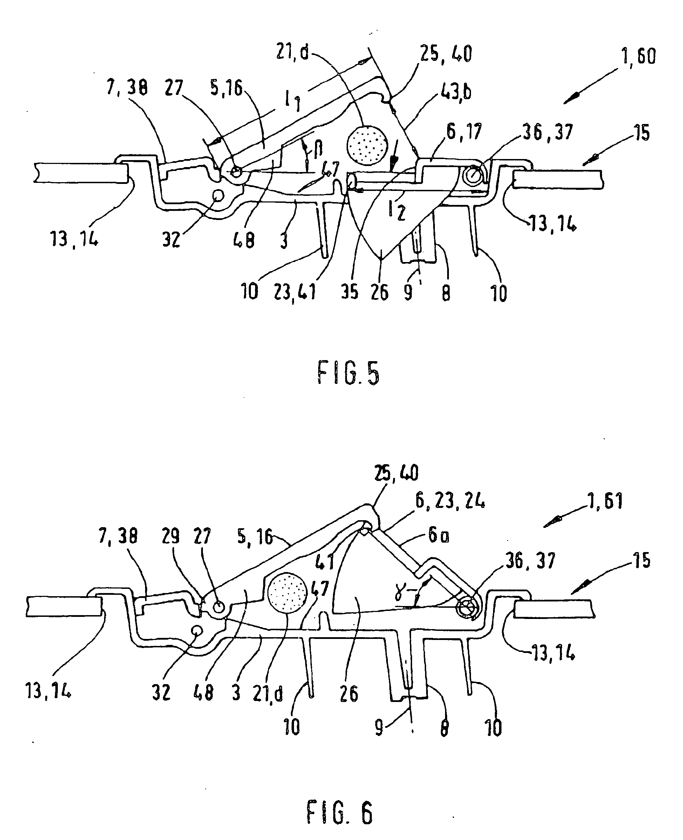

Auf der dazu gegenüberliegenden Seite des Hakens 5 ist der Sicherungsbügel 6 um einen Zwischenraum oder Spalt 34 beabstandet zu einer Stirnseite 33 des freien Endes 25 des Hakens 5 in einer eingeklappten Position 17 angeordnet. In der eingeklappten Stellung 16 a des Hakens 5 überdeckt das freie Ende 25 des Hakens 5 einen Absatz 35 des Sicherungsbügels 6. Der Absatz 35 des Sicherungsbügels 6 ist in den Figuren 5 und 6 erkennbar. Der Sicherungsbügel 6 ist an seinem Ende 37 über eine im Gehäuse 3 angeordnete Schwenkachse 36 im Gehäuse 3 schwenkbar gelagert.

Die Fig. 4 zeigt einen entriegelten Haken 5 in der ausgeklappten Stellung 16. Die Entriegelung erfolgt in der gezeigten Ausführungsform dadurch, dass auf ein freies Ende 38 der Entriegelungstaste 7 gedrückt wird, so dass die Entriegelungstaste 7 um die Schwenkachse 32 nach unten um einen vorbestimmten Winkel α geschwenkt wird, wobei der Winkel α beispielsweise zwischen *α* = 2 bis 10° liegt.

Durch die Schwenkbewegung der Entriegelungstaste 7 kommen die Rasthaken 29 und 31 außer Eingriff, so dass der vorgespannte Haken 5 nach außen um einen Winkel *β* schwenkt, der beispielsweise bei β = 20 bis 40°, insbesondere 30° liegt. Nach der Schwenkung des Hakens 5 um den Winkel β kommt der Anschlag 31 des Hakens 5 in Eingriff mit dem Anschlag 30a des Gehäuses 3.

Der Sicherungsbügel 6 wird in der Fig. 4 durch eine Kraft F nach unten gedrückt, so dass der Zwischenraum 18 zwischen der Innenfläche 19 und der Außenfläche 20 des Auflageflansches 12 sowie eine Außenfläche 39 des Sicherungsbügels 6 frei zugänglich ist.

Aus den Fig. 3 und 4 geht ferner hervor, dass am freien Ende 25 des Hakens 5 eine Abweisrippe 42 ausgebildet ist. Die Abweisrippe 42 dient als Einklemmschutz beim Aushängen des Halteteils 21 des Ladeguts 2.

Die Fig. 5 entspricht der Fig. 1, in der sich das Halteteil 21 des Ladeguts 2 im einhängten Zustand befindet, jedoch noch keine Verriegelung zwischen dem Haken 5 und dem Sicherungsbügel 6 stattgefunden hat. Das Halteteil 21 verhindert ein Hochklappen des Sicherungsbügels 6 um dessen Schwenkachse 36.

Die Schnittdarstellung der Vorrichtung 1 in der Fig. 6 entspricht der Fig. 2, in der sich das Halteteil 21 des Ladeguts 2 im einhängten Zustand befindet und die gegenüberliegenden freien Enden 25 und 23 des Hakens 5 und des Sicherungsbügels 6 formschlüssig miteinander verhakt sind.

In der in den Figuren 5 und 6 gezeigten Ausführungsform ist dazu am freien Ende 25 des Hakens 5 mindestens ein Rasthaken 40 einstückig ausgebildet. Am freien Ende 23 des Sicherungsbügels 6 ist entsprechend der Anzahl der Rasthaken 40 jeweils ein passendes Gegenstück in Form eines Vorsprunges oder einer Rastnase 41 oder dergleichen einstückig am Sicherungsbügel 6 angeformt.

Die Fig. 6 zeigt die Verriegelungsposition 24, in der der Sicherungsbügel 6 um einen Schwenkwinkel γ nach außen verschwenkt ist, wobei der Schwenkwinkel γ des Sicherungsbügels 6 beispielsweise bei γ = 30 bis 50°, insbesondere bei 45°, liegt. Die beiden gegenüberliegenden, freien Enden 23 und 25 des Sicherungsbügels 6 und des Hakens 5 sind über die jeweils vorhandenen Rasthaken 40 des Hakens 5 und die dazu entsprechenden Rastnasen 41 des Sicherungsbügels 6 formschlüssig miteinander verbunden, so dass ein weiteres Ausschwenken des Hakens 5 und/oder des Sicherungsbügels 6 verhindert ist.

Der Haken 5 ist in dieser Verriegelungsposition 24 in der gezeigten Ausführungsform um einen Winkel β verschwenkt, der bei β = 20 bis 40°, insbesondere 30° liegt.

Die Länge l₁ des Hakens 5 und die Länge l₂ des Sicherungsbügels 6 und die Schwenkwinkel β und γ sind so bemessen, dass ein in der Fig. 5 gezeigter Öffnungsspalt 43 eine Breite b aufweist, die größer als ein Durchmesser d des Halteteils 21 ist. In der gezeigten Ausführungsform liegt die Breite b bei b=10 bis 20 mm. In anderen Ausführungsformen kann die Spaltbreite b größer oder kleiner sein.

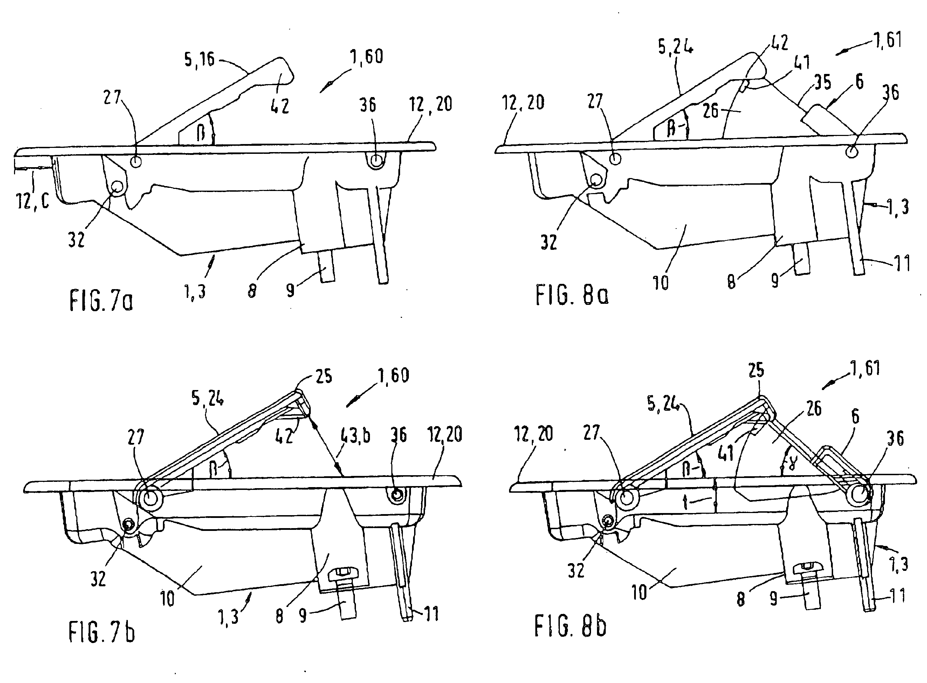

Die Fig. 7a und 7b zeigen eine Seitenansicht der Vorrichtung 1 entsprechend den Figuren 1, 4 und 5, wobei die Fig. 7b eine transparente Darstellung der Fig. 7a ist. In den Fig. 7a und 7b befindet sich der Haken 5 in einer ausgeklappten Stellung 16. Ein nicht dargestelltes Halteteil 21 eines Ladegutes 2 kann in den Öffnungsspalt 43 zwischen der Abweisrippe 42 des Hakens 5 und der Außenfläche 20 des Auflageflansches 12 eingehängt oder ausgehängt werden. In der gezeigten Ausführungsform liegt eine Breite c des Auflageflansches 12 bei c = 7 bis 15 mm.

Die Fig. 8a zeigt eine Seitenansicht der Vorrichtung 1, aus der die Form des Gehäuses 3 hervorgeht. Der Haken 5 und der Sicherungsbügel 6 befinden sich in der Verriegelungsposition 24 entsprechend den Figuren 2 und 6. Unterhalb des wannenförmigen Hohlraums 4 des Gehäuses 3 sind die Versteifungswände 10 und die beiden Zentrierzapfen 11 zur Vorzentrierung des Gehäuses 3 ausgebildet. Aus der in der Fig. 8a sichtbaren Führung 8 ragt ein Ende einer Befestigungsschraube 9.

In der Fig. 8b, die eine transparente Darstellung der Fig. 8a ist, ist die Lage eines Schraubenkopfes der Befestigungsschraube 9 erkennbar, die auf einen Flansch der Führung 8 aufliegt, der eine Durchgangsbohrung umgibt. Der wannenförmige Hohlraum 4 weist eine Tiefe t auf, die von den Abmessungen des Hakens 5, des Sicherungsbügels 6 und der Entriegelungstaste 7 abhängig ist, und in der gezeigten Ausführungsform bei t = 10 bis 20 mm liegt.

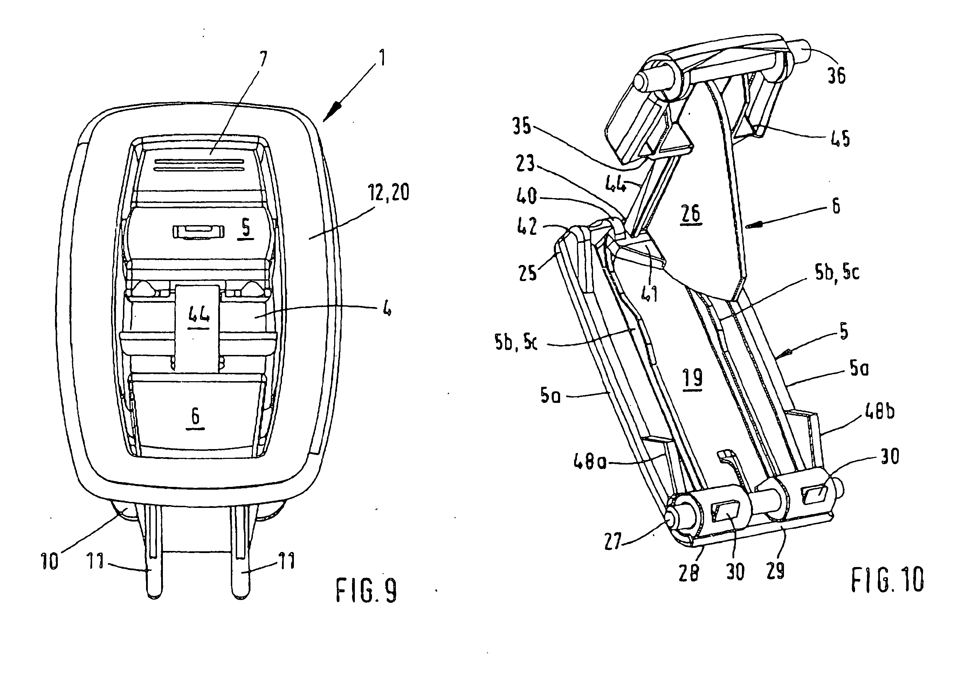

Die Fig. 9 zeigt die Vorrichtung 1 in einer perspektivischen Ansicht von oben, in der sich der Haken 5 und der Sicherungsbügel 6 in der Verriegelungsposition 24 befinden. Der Sicherungsbügel 6 weist zur Erleichterung des Einhängens und Aushängens des Halteteils 21 des Ladeguts 2 einen schmalen, stegförmigen Abschnitt 44 auf.

In der Fig. 10 sind der Haken 5 und der Sicherungsbügel 6 in einer perspektivischen Ansicht von unten dargestellt. An einer in der Fig. 10 gezeigten Unterseite 45 des Sicherungsbügels 6 ist die Abweisrippe 26 erkennbar, die neben der Klemmschutzfunktion gleichzeitig eine Versteifung des stegförmigen Abschnittes 44 bewirkt.

In der Fig. 10 sind ferner der Rasthaken 29 und die beiden Anschläge 30 des Hakens 5 vergrößert dargestellt. Die beiden an der Stirnseite 28 des Hakens 5 ausgebildeten Anschläge 30 befinden sich in Höhe der Schwenkachse 27. Die beiden Anschläge 30 kommen in der ausgeklappten Stellung 16 des Hakens 5 in Anlage mit dem in der Fig. 3 dargestellten Anschlag 30a, der an einem Boden 47 des Hohlraumes 4 des Gehäuses 3 ausgebildet ist. In der in der Fig. 10 gezeigten Ausführungsform ist der Rasthaken 29 als ein durchgehender, vorstehender Rand ausgebildet. Ferner ist in der Fig. 10 die Lage und Form einer der beiden Abweisrippen 42 erkennbar, die an der Innenfläche 19 des Hakens 5 an dessen freien Ende 25 und an dessen Außenrändern 5b ausgebildet sind.

In der Fig. 10 sind die beiden dreieckförmigen Abweisrippen 48a und 48b an den Außenrändern 5b vor dem über die Schwenkachse 27 gelagerten Ende 22 des Hakens 5 erkennbar. Die beiden Abweisrippen 48a und 48b bewirken in der Verriegelungsposition 24 den Klemmschutz, da die beiden Abweisrippen 48a und 48b dann in den Zwischenraum 18 vorragen. Durch die Abweisrippen 48a und 48b wird ein Verrutschen oder Einklemmen des Halteteils 21 in Richtung der Schwenkachse 27 verhindert.

Ferner sind an der Innenfläche 19 des Hakens 5 zwei in Längsrichtung parallel verlaufende Stege 5b mit jeweils einer Erhebung 5c vorgesehen, die einen definierten Kontakt des frei verschwenkbaren Endes 23 des Sicherungsbügels 6 an der Innenseite 19 des Hakens 5 bewirken. Die Stege 5c dienen gleichzeitig zur Versteifung des Hakens 5. In einer anderen Ausführungsform sind an der Innenfläche 19 des Hakens 5 nur Erhebungen 5c vorgesehen

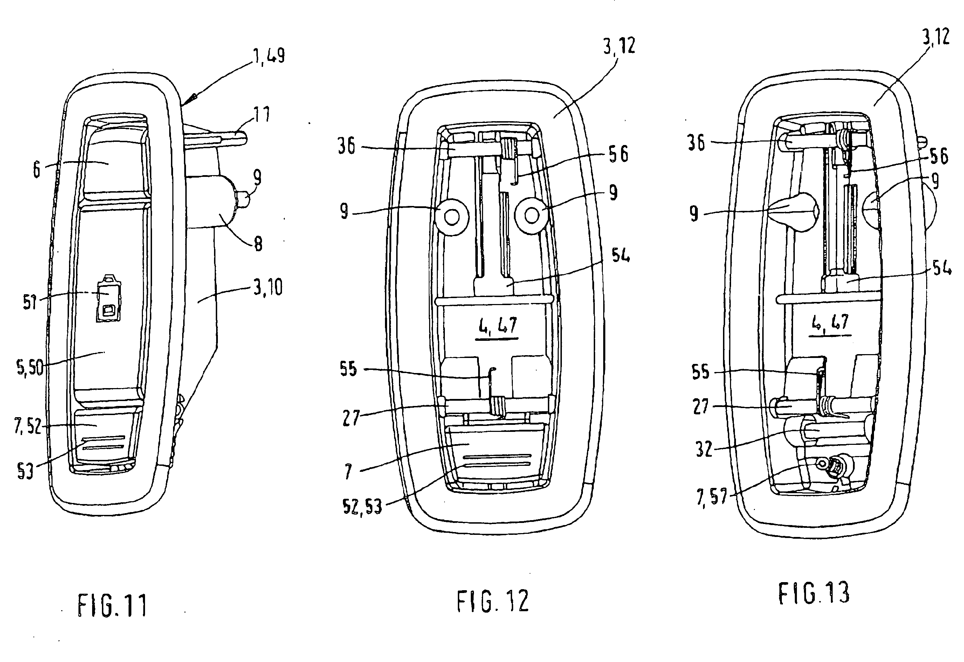

Die Fig. 11 zeigt eine perspektivische Ansicht von oben der Vorrichtung 1 in einer Nichtgebrauchsstellung 49. Auf einer Außenfläche 50 des Hakens 5 ist ein Symbol 51 zur Kennzeichnung der Halterungsfunktion der Vorrichtung 1 vorgesehen. Auf einer Außenfläche 52 der Entriegelungstaste 7 ist eine Markierung 53 zur Kennzeichnung der Funktion als Betätigungs- oder Entriegelungstaste ausgebildet.

In einer anderen Ausführungsform kann zusätzlich oder alternativ eine Beschriftung oder ein Bild oder ein sonstiges Symbol auf der Außenfläche 52 der Entriegelungstaste 7 vorgesehen sein.

Die Fig. 12 zeigt eine Ansicht von oben auf die Vorrichtung 1, wobei in der Fig. 12 der Haken 5 und der Sicherungsbügel 6 entfernt ist. Aus der Fig. 12 geht hervor, dass im Boden 47 des Hohlraums 4 des Gehäuses 3 eine T-förmige Durchgangsöffnung 54 ausgebildet ist, aus der die Abweisrippe 26 des Sicherungsbügels 6 aus der Nichtgebrauchsstellung 49 in die Verriegelungsposition 24 und zurück bewegbar ist.

Ferner sind in der Fig. 12 die Rückstellfeder 55 des Hakens 5 und die Rückstellfeder 56 des Sicherungsbügels 6 erkennbar. Die Rückstellfedern 55 und 56 stehen so in Eingriff mit dem Haken 5 bzw. dem Sicherungsbügel 6, dass der Haken 5 und der Sicherungsbügel 6 durch eine Vorspannung in die Nichtgebrauchsstellung 49 geschwenkt werden. Die Vorspannung wird durch die Rückstellfedern 55 und 56 erzeugt. Die Rückstellfedern 55, 56 sind jeweils um die entsprechende Schwenkachse 27 für den Haken 5 bzw. die Schwenkachse 36 für den Sicherungsbügel 6 herum angeordnet. In der Fig. 12 sind ferner die Schraubenköpfe der Schrauben 9 dargestellt, die sich in den zylindrischen Führungen 8 des Gehäuses 3 befinden.

In der Fig. 13 ist zusätzlich eine Rückstellfeder 57 für die Entriegelungstaste 7 erkennbar, die beabstandet zu der Schwenkachse 32 angeordnet ist. Die Rückstellfeder 57 erzeugt eine Vorspannung, die die Entriegelungstaste 7 in die in der Fig. 11 gezeigte Nichtgebrauchsstellung 49 drückt.

## Patentansprüche

1. Vorrichtung zur Halterung von Ladegut, mit einem Gehäuse, das Mittel zur Befestigung der Vorrichtung in einer Aufnahmeöffnung eines Bauteils aufweist, mit Mitteln, an denen Ladegut befestigbar ist, wobei die Mittel, an denen Ladegut befestigbar ist, ein Haken (5) und ein Sicherungsbügel (6) sind, die im Gehäuse (3, 4) schwenkbar so gelagert sind, dass der Haken (5) und der Sicherungsbügel (6) aus einer Nichtgebrauchsstellung (49), in der der Haken (5) und der Sicherungsbügel (6) in einem Hohlraum (4) des Gehäuses (3) versenkt sind, in eine Gebrauchsstellung (61) und zurück verschwenkbar sind, wobei in der Gebrauchsstellung (61) ein frei verschwenkbares Ende (25) des Hakens (5) mit einem frei verschwenkbaren Ende (23) des Sicherungsbügels (6) über Mittel (42, 41) formschlüssig verriegelt ist, **dadurch gekennzeichnet, dass** der Haken (5) einen vorderen, abgesenkten Abschnitt (6a) des Sicherungsbügels (6) einschließlich des freien Endes (23) des Sicherungsbügels (6) überdeckt, dass sich an den vorderen Abschnitt (6a) des Sicherungsbügels (6) ein Absatz (35) anschließt und dass das freie Ende (25) des Hakens (5) um einen Spalt (34) beabstandet zu dem freien Enden (23) des Sicherungsbügels (6) angeordnet ist, so dass sich in der Nichtgebrauchsstellung (49) der Vorrichtung (1) eine ebene Außenfläche der Vorrichtung (1) ergibt.

2. Vorrichtung nach Anspruch 1,
**dadurch gekennzeichnet, dass** der Haken (5) in einer Nichtgebrauchsstellung (49) durch Mittel (29, 31) über Formschluß verriegelt ist, die durch eine Betätigungsvorrichtung (7) entriegelbar sind.

3. Vorrichtung nach den Ansprüchen 1 oder 2,
**dadurch gekennzeichnet, dass** ein Betätigungsweg s der Betätigungsvorrichtung (7) und/oder ein Schwenkwinkel α der Betätigungsvorrichtung (7) um eine im Gehäuse (3) gelagerte Schwenkachse (32) so gering ist, dass ein Antippen der Betätigungsvorrichtung (7) zur Entriegelung genügt.

4. Vorrichtung nach einem der vorhergehenden Ansprüche,
**dadurch gekennzeichnet, dass** der Verschwenkweg s bei s = 3 bis 8mm und der Schwenkwinkel α bei α = 2 bis 7° liegt.

5. Vorrichtung nach einem der vorhergehenden Ansprüche,
**dadurch gekennzeichnet, dass** Mittel (5, 55; 6, 56; 7, 57) vorgesehen sind, die eine Vorspannung des Hakens (5), des Sicherungsbügels (6) und der Betätigungsvorrichtung (7) in der Weise bewirken, dass bei einer Betätigung der Betätigungsvorrichtung (7) der Haken (5) und der Sicherungsbügel (6) in die Verriegelungsposition (24) der End-Gebrauchsstellung (61) verschwenken und die Betätigungsvorrichtung (7) in die Nichtgebrauchsstellung (49) zurückschwenkt.

6. Vorrichtung nach einem der vorhergehenden Ansprüche,
**dadurch gekennzeichnet, dass** die Mittel (55 und 56) zum Ausschwenken des Hakens (5) und des Sicherungsbügels (6) jeweils mindestens eine Feder ist und dass das Mittel zum Zurückschwenken der Betätigungsvorrichtung (7) eine Feder (57) ist.

7. Vorrichtung nach Anspruch 6,
**dadurch gekennzeichnet, dass** die jeweilige Feder (55, 56) eine Torsionsfeder ist, die jeweils um eine Schwenkachse (27) für den Haken (5) und eine Schwenkachse (36) für den Sicherungsbügel (6) angeordnet ist und dass die Feder (57) zum Zurückschwenken der Betätigungsvorrichtung (7) in die Nichtgebrauchsstellung (49) eine Schraubenfeder ist, die mit ihren Enden zum einen an der Betätigungsvorrichtung (7) und zum anderen über Mittel am Gehäuse (3) gelagert ist.

8. Vorrichtung nach einem der vorhergehenden Ansprüche,
**dadurch gekennzeichnet, dass** die Mittel (42, 41) an dem freien Ende (25) des Hakens (5) und an dem freien Ende (23) des Sicherungsbügels (6), die eine formschlüssige Verriegelung der beiden Enden (25, 23) in der Verriegelungsposition (24) bewirken, mindestens ein Haken (40) und jeweils ein dazu passendes Gegenstück in Form eines Vorsprunges oder einer Rastnase (41) sind.

9. Vorrichtung nach einem der vorhergehenden Ansprüche,
**dadurch gekennzeichnet, dass** eine Entriegelung der freien Enden (25, 23) durch ein Zurückverschwenken des Hakens (5) erfolgt und dass durch ein vollständiges Zurückschwenken des Hakens (5) in die Nichtgebrauchsstellung (49) eine Verriegelung zwischen dem Haken (5) und der Betätigungsvorrichtung (7) erfolgt.

10. Vorrichtung nach einem der vorhergehenden Ansprüche,
**dadurch gekennzeichnet, dass** das freie Ende (23) des Sicherungsbügels (6) unterhalb einer Innenfläche (19) des Hakens (5) angeordnet ist und dass beim Zurückverschwenken des Hakens (5) zwangsläufig ein Zurückverschwenken des Sicherungsbügels (6) erfolgt.

11. Vorrichtung nach einem der vorhergehenden Ansprüche,
**dadurch gekennzeichnet, dass** an der Innenfläche (19) des Hakens (5), vor der Schwenkachse (27) am gelagerten Ende (22) des Hakens (5) Mittel (48) vorgesehen sind, die im ausgeschwenkten Zustand (16) des Hakens (5) in die Verriegelungsposition (24) ein Einklemmen eines Halteteils (21) eines Ladeguts (2) zwischen der Innenfläche (5a) und einer Außenfläche (20) eines Auflageflansches (12) verhindern.

12. Vorrichtung nach einem der vorhergehenden Ansprüche,
**dadurch gekennzeichnet, dass** das Mittel (48) mindestens eine vorstehende Abweisrippe (48) ist, die an einem Außenrand (5b) an der Innenfläche (5a) des Hakens (5) ausgebildet ist.

13. Vorrichtung nach Anspruch 12,
**dadurch gekennzeichnet, dass** die jeweilige Abweisrippe (48) dreieckförmig ist.

14. Vorrichtung nach einem der vorhergehenden Ansprüche,
**dadurch gekennzeichnet, dass** am freien Ende (25) des Hakens (5) mindestens eine Abweisrippe (42) ausgebildet ist, die bewirkt, dass ein Halteteil (21) des Ladeguts (2) ohne Kontakt mit dem jeweils vorgesehenen Rasthaken (40) an dem freien Ende (25) des Hakens (5) vorbei bewegbar ist.

15. Vorrichtung nach einem der vorhergehenden Ansprüche,
**dadurch gekennzeichnet, dass** an der Innenfläche (19) des Hakens (5) mindestens eine Längssteg (5b) mit einer Erhebung (5c) oder nur eine Erhebung (5c) vorgesehen ist und dass das freie Ende (23) des Sicherungsbügels (6) beim gemeinsamen Ausschwenken des Hakens (5) und des Sicherungsbügels (6) zumindest in Kontakt mit der Erhebung (5c) kommt.

16. Vorrichtung nach einem der vorhergehenden Ansprüche,
**dadurch gekennzeichnet, dass** die Schwenkachse (27) am Ende (22) des Hakens (5) einstückig angeformt ist.

17. Vorrichtung nach einem der vorhergehenden Ansprüche,
**dadurch gekennzeichnet, dass** am Ende (22) des Hakens (5) ein Anschlag (29) zur Verriegelung mit einem an der Entriegelungsvorrichtung (7) ausgebildeten Anschlag (31) vorgesehen ist und dass dazu beabstandet mindestens ein weiterer Anschlag (30) am Ende (22, 27) ausgebildet ist, der in der Verriegelungsposition (24) mit einem am Gehäuse (3) vorgesehenen Anschlag (30a) kommt.

18. Vorrichtung nach einem der vorhergehenden Ansprüche,
**dadurch gekennzeichnet, dass** an einer Unterseite (45) des Sicherungsbügels (6) mindestens eine Abweisrippe (26) ausgebildet ist, die ein Einklemmen des Halteteils (21) des Ladeguts (2) zwischen dem Sicherungsbügel (6) und der Außenfläche (20) des Auflageflansches (12) verhindert.

19. Vorrichtung nach einem der vorhergehenden Ansprüche,
**dadurch gekennzeichnet, dass** an dem gelagerten Ende (37) des Sicherungsbügels (6) die Schwenkachse (36) angeordnet ist.

20. Vorrichtung nach einem der vorhergehenden Ansprüche,
**dadurch gekennzeichnet, dass** die Vorrichtung (1) zur Halterung von Ladegut (2) an einem Bauteil (15) in einem Innenraum eines Fahrzeuges angeordnet ist.

21. Vorrichtung nach einem der vorhergehenden Ansprüche,
**dadurch gekennzeichnet, dass** ein Mittel zur Befestigung der Vorrichtung (1) in einer Aufnahmeöffnung (14) des Bauteils (15) ein Auflageflansch (12) ist, der umlaufend am Gehäuse (3) ausgebildet ist.

22. Vorrichtung nach einem der vorhergehenden Ansprüche,
**dadurch gekennzeichnet, dass** an dem Bauteil (15) Mittel, wie Halterungsabschnitte oder Wandabschnitte oder dergleichen, vorgesehen sind, in denen die Vorrichtung (1) über Befestigungsmittel (9) befestigbar ist.

23. Vorrichtung nach einem der vorhergehenden Ansprüche,
**dadurch gekennzeichnet, dass** sich zum Einhängen eines Halteteils (21) eines Ladeguts (2) der Haken (5) in der ausgeklappten Stellung (16) für die Verriegelungsposition (24) befindet und dass sich der Sicherungsbügel (6) durch Aufbringen einer Haltekraft (F) im Gehäuse (3) in einer eingeklappten Position befindet.

24. Vorrichtung nach einem der vorhergehenden Ansprüche,
**dadurch gekennzeichnet, dass** sich der Sicherungsbügel (6) nach dem Wegfall der Kraft (F) aus der eingeklappten Position (17) in die Verriegelungsposition (24) verschwenkt.

25. Vorrichtung nach einem der vorhergehenden Ansprüche,
**dadurch gekennzeichnet, dass** der Haken (5) und der Sicherungsbügel (6) aus der Verriegelungsposition (24) durch Aufbringung einer Kraft manuell in die Nichtgebrauchsstellung (49) zurück verschwenkbar sind.

26. Vorrichtung nach einem der vorhergehenden Ansprüche,
**dadurch gekennzeichnet, dass** sich in der ausgeklappten Stellung (16) des Hakens (5) und in der eingeklappten Stellung (17) des Sicherungsbügels (6) ein Öffnungsspalt (43) ergibt, dessen Breite (b) bei b = ca. 10 bis 30mm liegt.

## Claims

1. A device for holding material for loading, comprising a casing containing means for fastening the device in an opening for receiving a component and means to which the material for loading can be fastened, wherein the means for fastening the loaded material are a hook (5) and a securing ring (6) which are pivotably disposed in the casing (3, 4) so that the hook (5) and the securing ring (6) can be swung out of an inoperative position (49) in which the hook (5) and the ring (6) are lowered into a cavity (4) in the casing (3) into an operative position (61) and back, wherein in the operative position (61) a freely swingable end (25) of the hook (5) is positively locked to a freely swingable end (23) of the securing ring (6) by means (42, 41), **characterised in that** the hook (5) covers a front lowered portion (6a) of the securing ring (6) including the free end (23) of the securing ring (6) so that a shoulder (35) adjoins the front portion (6a) of the securing ring (6) and the free end (25) of the hook (5) is separated by a gap (34) from the free end (23) of the securing ring (6) so that when the device (1) is in the inoperative position (49) the device (1) has a flat outer surface.

2. A device according to claim 1,
**characterised in that** the hook (5) is positively locked in an inoperative position (49) by means (29, 31) which are unlockable by an actuating device (7).

3. A device according to claim 1 or claim 2,
**characterised in that** a distance travelled (s) by the actuating device (7) and/or an angle (α) through which the actuating device (7) pivots around a pin (32) mounted in the casing (3) are small enough for the actuating device (7) to be unlocked by tapping it.

4. A device according to any of the preceding claims,
**characterised in that** the distance (s) is about 3 to 8 mm and the angle (α) is about 2 to 7°.

5. A device according to any of the preceding claims,
**characterised in that** means (5, 55; 6, 56; 7, 57) are provided for prestressing the hook (5), the ring (6) and the actuating device (7) so that when the device (7) is actuated the hook (5) and the ring (6) swivel into the locked position (24) for final use (61) and the actuating device (7) swings back into the inoperative position (49).

6. A device according to any of the preceding claims,
**characterised in that** the means (55 and 56) for swinging out the hook (5) and the securing ring (6) each comprise at least one spring and the means for swinging the actuating device (7) back is a spring (57).

7. A device according to claim 6,
**characterised in that** each spring (55, 56) is a torsion spring disposed around a respective pivot pin (27) for the hook (5) and a pivot pin (36) for the ring (6), and the spring (57) for swinging the actuating device (7) back into the inoperative position (49) is a helical spring, one end of which is mounted on the actuating device (7) and the other is mounted in the casing (3) via means.

8. A device according to any of the preceding claims, **characterised in that** the means (42, 41) on the free end (25) of the hook (5) and on the free end (23) of the securing ring (6) for positively locking the two ends (25, 23) in the locked position (24) comprise at least one hook (40) and a matching mating member in the form of a projection or a detent or latch (41).

9. A device according to any of the preceding claims, **characterised in that** the free end (25, 23) is unlocked by swinging the hook (5) backwards, and when the hook (5) has swung completely backwards into the inoperative position (49) the hook (5) and the actuating device (7) are locked together.

10. A device according to any of the preceding claims, **characterised in that** the free end (23) of the securing ring (5) is disposed under an inner surface (19) of the hook (5), and when the hook (5) swings back, the securing ring (6) automatically swings back.

11. A device according to any of the preceding claims, **characterised in that** means (48) are provided on the inner surface (19) of the hook (5) in front of the pivot pin (27) on the mounted end (22) of the hook (5) and, when the hook (5) is in the swung-out position (16) into the locking position (24), prevent a part (21) for retaining material (2) for loading from jamming between the inner surface (5a) and the outer surface (20) of a bearing flange (12).

12. A device according to any of the preceding claims,
**characterised in that** the means (48) comprise at least one projecting and deflecting rib (48) formed on an outer edge (5b) on the inner surface (5a) of the hook (5).

13. A device according to claim 12,
**characterised in that** each deflecting rib (48) is triangular.

14. A device according to any of the preceding claims,
**characterised in that** at least one deflecting rib (42) is formed on the free end (25) of the hook (5), such that a part (21) for retaining the material (2) can move past the free end (25) of the hook (5) without contact with the respective catch hook (40).

15. A device according to any of the preceding claims,
**characterised in that** at least one longitudinal web (5b) with a raised portion (5c), or a raised portion (5c) only, is provided on the inner surface (19) of the hook (5), and when the hook (5) and the ring (6) swing out together, the free end (23) of the ring (6) comes at least in contact with the raised portion (5c).

16. A device according to any of the preceding claims,
**characterised in that** the pivot pin (27) is integrally formed on the end (22) of the hook (5).

17. A device according to any of the preceding claims, **characterised in that** a stop (29) for locking to a stop (31) on the unlocking device (7) is provided at the end (22) of the hook (5) and at least one additional stop (30) at a distance therefrom is formed on the end (22, 27) and comes against a stop (30a) on the casing (3) when in the locked position (24).

18. A device according to any of the preceding claims, **characterised in that** at least one deflecting rib (26) is formed on the underside (45) of the securing ring (6) and prevents the part (21) for holding the material (2) from jamming between the securing ring (6) and the outer surface (20) of the bearing flange (12).

19. A device according to any of the preceding claims, **characterised in that** the pivot pin (36) is disposed on the mounted end (37) of the securing ring (6).

20. A device according to any of the preceding claims, **characterised in that** the device (1) for holding the material (2) is disposed on a component (15) in a space inside a vehicle.

21. A device according to any of the preceding claims, **characterised in that** a means for fastening the device (1) in a receiving opening (14) in the component (15) comprises a bearing flange (12) formed all round the casing (3).

22. A device according to any of the preceding claims, **characterised in that** means such as retaining portions or wall portions or the like are provided on the component (15) so that the device (1) can be secured therein via means (9).

23. A device according to any of the preceding claims,
**characterised in that** in order to suspend a part (21) for retaining a material (2), the hook (5) is in the opened-out position (16) for locking (24) and the securing ring (6) is brought into a retracted position by applying a retaining force (F) in the casing (3).

24. A device according to any of the preceding claims,
**characterised in that** after the cessation of the force (F) the securing ring (6) swings out of the retracted position (17) into the locked position (24).

25. A device according to any of the preceding claims,
**characterised in that** the hook (5) and the securing ring (6) can be swung out of the locked position (24) and back into the inoperative position (49) by applying a force manually.

26. A device according to any of the preceding claims,
**characterised in that** when the hook (5) is in the extended position (16) and the securing ring (6) is in the retracted position (17), the resulting opening or gap (43) has a width of about b = 10 to 30 mm.

## Revendications

1. Dispositif pour fixer une charge comprenant :
- un boîtier muni de moyens pour fixer le dispositif dans une ouverture de réception d'une pièce,
- des moyens auxquels se fixe la charge,
* les moyens auxquels se fixe la charge se composant d'un crochet (5) et d'un arceau de sécurité (6) monté pivotant dans le boîtier (3, 4),
- le crochet (5) et l'arceau de sécurité (6) étant escamotés en position de non utilisation (49) dans une cavité (4) du boîtier (3) dans laquelle viennent le crochet (5) et l'arceau de sécurité (6), pour y pivoter ou retourner en position d'utilisation (61),
* et en position d'utilisation (61), une extrémité (25) du crochet (5) pivotant librement est verrouillée par une liaison par la forme avec l'extrémité (23) pivotant librement de l'arceau de sécurité (6) par l'intermédiaire de moyens (42, 41),
dispositif **caractérisé en ce que**
- le crochet (5) a un segment (6a) avant, abaissé, y compris l'extrémité libre (23) de l'arceau de sécurité (6),
- un prolongement (35) est relié au segment avant (6a) de l'arceau de sécurité (6), et
- l'extrémité libre (25) du crochet (5) est écartée d'un intervalle (34) par rapport à l'extrémité libre (23) de l'arceau de sécurité (6) de façon qu'en position de non utilisation (49) du dispositif (1), la surface extérieure du dispositif (1) soit lisse.

2. Dispositif selon la revendication 1,
**caractérisé en ce qu'**
en position de non utilisation (49), le crochet (5) est verrouillé par des moyens (29, 31) réalisés par une liaison par la forme et qui peut être déverrouillée par le dispositif d'actionnement (7).

3. Dispositif selon la revendication 1 ou 2,
**caractérisé en ce qu'**
une course d'actionnement (s) du dispositif d'actionnement (7) et/ou un angle de pivotement (α) du dispositif d'actionnement (7) autour d'un axe de basculement (32) dans le boîtier (3) est tellement faible qu'il suffit de toucher le dispositif d'actionnement (7) pour le déverrouiller.

4. Dispositif selon l'une des revendications précédentes,
**caractérisé en ce que**
la course de basculement (s) se situe entre s = 3 et 8 mm et l'angle de basculement (α) se situe entre α = 2 et 7°.

5. Dispositif selon l'une des revendications précédentes,
**caractérisé par**
des moyens (5, 55 ; 6, 56 ; 7, 57) qui assurent la précontrainte du crochet (5), de l'arceau de sécurité (6) et du dispositif d'actionnement (7) de façon que pour un actionnement du dispositif d'actionnement (7), le crochet (5) et l'arceau de sécurité (6) basculent en position verrouillée (24) de la position d'utilisation finale (61) et le dispositif d'actionnement (7) bascule en retour dans la position de non utilisation (49).

6. Dispositif selon l'une des revendications précédentes,
**caractérisé en ce que**
les moyens (55, 56) pour déployer le crochet (5) et l'arceau de sécurité (6) sont constitués respectivement d'au moins un ressort et le moyen pour basculer l'organe d'actionnement (7) en retour est un ressort (57).

7. Dispositif selon la revendication 6,
**caractérisé en ce que**
le ressort respectif (55, 56) est un ressort de torsion installé autour d'un axe de basculement (27) pour le crochet (5) et un axe de basculement (36) pour l'arceau de sécurité (6), et
le ressort (57) pour basculer en retour le dispositif d'actionnement (7) en position de non utilisation (49) est un ressort hélicoïdal dont les extrémités sont d'une part reliées au dispositif d'actionnement (7) et d'autre part au boîtier (3) par l'intermédiaire de moyens.

8. Dispositif selon l'une des revendications précédentes,
**caractérisé en ce que**
les moyens (42, 41) à l'extrémité libre (25) du crochet (5) et à l'extrémité libre (23) de l'arceau de sécurité (6), qui produisent un verrouillage par une liaison par la forme des deux extrémités (25, 23) en position verrouillée (24), sont au moins un crochet (40) et une pièce complémentaire adaptée se présentant sous la forme d'une partie en saillie ou d'un bec d'accrochage (41).

9. Dispositif selon l'une des revendications précédentes,
**caractérisé en ce qu'**
un déverrouillage de l'extrémité libre (25, 23) se fait par le basculement en retour du crochet (5), et
le basculement en retour complet du crochet (5) en position de non utilisation (49) produit le verrouillage entre le crochet (5) et le dispositif d'actionnement (7).

10. Dispositif selon l'une des revendications précédentes,
**caractérisé en ce que**
l'extrémité libre (23) de l'arceau de sécurité (6) se trouve en dessous de la surface intérieure (19) du crochet (5), et
lors du basculement en retour du crochet (5), il y a nécessairement un basculement en retour de l'arceau de sécurité (6).

11. Dispositif selon l'une des revendications précédentes,
**caractérisé en ce que**
la surface intérieure (19) du crochet (5), à l'extrémité (22) du crochet (5) situé devant l'axe de pivotement (27), comporte des moyens (48) qui, à l'état déployé (16) du crochet (5) en position verrouillée (24), évitent le coincement d'une partie de fixation (21) d'une charge (2) entre la surface intérieure (5a) et la surface extérieure (20) d'une bride d'appui (12).

12. Dispositif selon l'une des revendications précédentes,
**caractérisé en ce que**
le moyen (48) comporte au moins une nervure d'écartement (48) venant en saillie, et dont le bord extérieur (5b) est réalisé sur la surface intérieure (5a) du crochet (5).

13. Dispositif selon la revendication 12,
**caractérisé en ce que**
la nervure d'écartement respective (48) est de forme triangulaire.

14. Dispositif selon l'une des revendications précédentes,
**caractérisé en ce que**
l'extrémité libre (25) du crochet (5) comporte au moins une nervure d'écartement (42) qui fait que la pièce de fixation (21) de la charge (2) peut passer devant l'extrémité libre (25) du crochet (5) sans contact avec le crochet d'accrochage (40).

15. Dispositif selon l'une des revendications précédentes,
**caractérisé en ce que**
la surface intérieure (19) du crochet (5) comporte au moins une nervure longitudinale (5b) avec une partie en relief (5c) ou seulement une partie en relief (5c), et
l'extrémité libre (23) de l'arceau de sécurité (6) est au moins en contact avec le bossage (5c) lors du déploiement commun du crochet (5) et de l'arceau de sécurité (6).

16. Dispositif selon l'une des revendications précédentes,
**caractérisé en ce que**
l'axe de basculement (27) est formé en une seule pièce à l'extrémité (22) du crochet (5).

17. Dispositif selon l'une des revendications précédentes,
**caractérisé en ce que**
l'extrémité (22) du crochet (5) comporte une butée (29) pour le verrouillage avec une butée (31) réalisée sur le dispositif de déverrouillage (7), et écartée de celle-ci, il y a au moins une autre butée (30) à l'extrémité (22, 27) qui, en position de verrouillage (24), vient contre une butée (30a) prévue sur le boîtier (3).

18. Dispositif selon l'une des revendications précédentes,
**caractérisé en ce que**
le côté inférieur (45) de l'arceau de sécurité (6) comporte au moins une nervure d'écartement (26) qui évite le pincement de la pièce de fixation (21) de la charge (2) entre l'arceau de sécurité (6) et la surface extérieure (20) de la bride d'appui (12).

19. Dispositif selon l'une des revendications précédentes,
**caractérisé en ce que**
l'extrémité montée (37) de l'arceau de sécurité (6) comporte l'axe de basculement (36).

20. Dispositif selon l'une des revendications précédentes,
**caractérisé en ce que**
le dispositif (1) pour tenir la charge (2) est prévu sur un composant (15) dans le volume intérieur du véhicule.

21. Dispositif selon l'une des revendications précédentes,
**caractérisé par**
un moyen de fixation du dispositif (1) dans une ouverture (14) de la pièce (15) est une bride d'appui (12) réalisée en périphérie sur le boîtier (3).

22. Dispositif selon l'une des revendications précédentes,
**caractérisé en ce que**
la pièce (15) comporte des moyens tels que des segments de fixation ou des segments de paroi ou analogues dans lesquels se fixe le dispositif (1) par l'intermédiaire de moyens de fixation (9).

23. Dispositif selon l'une des revendications précédentes,
**caractérisé en ce que**
pour accrocher une pièce de fixation (21) d'une charge (2), le crochet (5) se trouve en position déployée (16) pour la position de verrouillage (24) et l'arceau de sécurité (6) se trouve en position rabattue par l'application d'une force de maintien (F) dans le boîtier (3).

24. Dispositif selon l'une des revendications précédentes,
**caractérisé en ce que**
l'arceau de sécurité (6) après sa disparition de la force (F) bascule de la position rentrée (17) dans la position de verrouillage (24).

25. Dispositif selon l'une des revendications précédentes,
**caractérisé en ce que**
le crochet (5) et l'arceau de sécurité (6) peuvent basculer de la position verrouillée (24) par l'application d'une force manuelle pour revenir en position de non utilisation (49).

26. Dispositif selon l'une des revendications précédentes,
**caractérisé en ce qu'**
en position déployée (16) du crochet (5) et dans la position rentrée (17) de l'arceau de sécurité (6), on a un intervalle d'ouverture (43) dont la largeur (b) est de l'ordre de b = environ 10-30 mm.
